# FASCICULE DE BREVET EUROPEEN

(11) **EP 4 136 311 B1**
(45) Date de publication et mention de la délivrance du brevet: **25.12.2024**
(21) Numéro de dépôt: 21719277.2
(22) Date de dépôt: 09.04.2021
(51) Int. Cl.: E06B 9/68, G08C 17/00, H02J 9/00

(54) **COMMANDE D'ORGANE D'OCCULTATION DANS UN BATIMENT**
VORRICHTUNG ZUR STEUERUNG EINER SPERRVORRICHTUNG IN EINEM GEBÄUDE
DEVICE FOR CONTROLLING A BLOCKING DEVICE IN A BUILDING

(30) Priorité: 15.04.2020 FR 2003764
(43) Date de publication de la demande: 22.02.2023
(73) Titulaire: ABC Volet, 74700 Sallanches (FR)
(72) Inventeur: GRECO, Xavier, 74700 Sallanches (FR)
(74) Mandataire: Cabinet Poncet
(86) Numéro de dépôt international: PCT/IB2021/052947
(87) Numéro de publication internationale: WO 2021/209870

(56) Documents cités:
- EP-A1- 3 289 691
- EP-A2- 2 665 881
- WO-A1-03/030496
- FR-A1- 3 037 988

## Description

### DOMAINE TECHNIQUE DE L'INVENTION

La présente invention concerne le domaine des fermetures ou occultations motorisées dans un bâtiment.

Les organes de fermeture ou d'occultation motorisés dans les bâtiments peuvent constituer par exemple un volet roulant pour porte ou fenêtre, un store, une porte de garage. Le couple d'entraînement nécessaire pour manoeuvrer l'organe de fermeture ou d'occultation dépend de la masse à déplacer.

Dans le cas d'une faible masse à déplacer, par exemple pour un volet roulant de fenêtre ou de porte, ou pour un store de faible dimension, le couple d'entraînement nécessaire est relativement faible, inférieur à 10 Nm. Dans ce cas, il est possible d'utiliser aisément une source d'énergie électrique solaire telle qu'un panneau solaire photovoltaïque délivrant une tension électrique continue, qui alimente directement un élément accumulateur d'énergie électrique à tension électrique continue, lequel élément accumulateur d'énergie électrique est capable d'alimenter directement un moteur à courant continu ayant une tension nominale de l'ordre de 12 V et couplé mécaniquement à l'organe de fermeture ou d'occultation. Le système peut alors fonctionner en toute autonomie, ne nécessitant pas de câbles à installer ou à sortir, et ne nécessitant pas de disposer d'une alimentation électrique raccordée au réseau public de distribution d'énergie électrique.

Par exemple le document EP 3 289 691 A1 divulgue un dispositif de commande de motorisation d'organe de fermeture, dans lequel un accumulateur d'énergie électrique, chargé à partir de panneaux photovoltaïques, est connecté à un moteur de volet roulant par l'intermédiaire d'un circuit de commande. Le circuit de commande reçoit un signal par transmission aérienne à partir d'une télécommande. Le signal est analysé par le circuit de commande, qui lui-même utilise la charge de l'accumulateur d'énergie électrique pour alimenter le moteur en fonction de ce signal. Pour recevoir et analyser le signal, le circuit de commande doit être alimenté en permanence en énergie électrique à partir de l'accumulateur d'énergie électrique.

Une première difficulté est que l'énergie solaire ne peut pas être captée en continu et selon une puissance constante, notamment lors de certaines périodes de faible ensoleillement. Cela nécessite l'utilisation d'éléments accumulateurs d'énergie électrique de capacité surdimensionnée, conduisant à un encombrement pouvant être incompatible avec un logement dans un caisson de motorisation d'organe d'occultation.

Cette première difficulté est encore augmentée dans le cas d'une plus grande masse à déplacer. Par exemple pour un store de grande dimension ou pour une porte de garage, le couple d'entraînement nécessaire peut-être beaucoup plus important, bien supérieur à 10 Nm. On utilise alors un moteur électrique à courant alternatif, fonctionnant à la tension d'alimentation habituelle de 230 V, alimenté à partir du réseau public de distribution d'énergie électrique. L'énergie nécessaire nécessite de surdimensionner fortement l'élément accumulateur d'énergie électrique, si l'on souhaite un fonctionnement autonome à partir de l'énergie solaire

Pour réduire la dimension nécessaire de l'élément accumulateur d'énergie, on peut être tenté de réduire la consommation du dispositif pendant les périodes de repos. Un moyen peut alors consister à inhiber l'alimentation des circuits électroniques de commande et d'alimentation du moteur électrique, et à réactiver ces circuits électroniques à réception d'un signal de mise en marche reçu d'une télécommande.

Mais une seconde difficulté résulte alors du fait que les signaux de commande sont généralement codés, pour éviter les actionnements intempestifs provoqués par la réception de signaux provenant du voisinage. Le code est tournant, c'est-à-dire qu'il est modifié à chaque signal de commande.

Dans ce cas, lors de la réception d'un signal de commande codé provenant d'une télécommande, les circuits électroniques de commande du moteur électrique, qui ne sont pas alimentés, ne sont pas capables de reconnaître le code correct du signal de commande qui permet le démarrage du moteur électrique. L'utilisateur doit alors actionner plusieurs fois la télécommande, jusqu'à ce que les circuits reconnaissent le code du signal de commande.

### EXPOSE DE L'INVENTION

Un problème proposé par la présente invention est de concevoir un dispositif perfectionné de commande d'organe de fermeture ou d'occultation dans un bâtiment, apte d'une part à fonctionner en toute autonomie et sous un faible volume grâce à une très faible consommation d'énergie électrique à l'état de repos, et apte d'autre part à reconnaître le code du signal de commande dès sa réception sans que cela nécessite plusieurs actionnements de la télécommande par l'utilisateur.

L'invention vise le cas échéant à assurer les fonctions ci-dessus tout en utilisant les circuits électroniques connus habituellement et présents dans la commande des moteurs d'organe d'occultation pour la réception et la reconnaissance du signal de commande.

Pour atteindre ces objets ainsi que d'autres, l'invention propose un dispositif de commande de motorisation d'organe de fermeture ou d'occultation dans un bâtiment, comprenant :
- au moins un moteur électrique couplé mécaniquement à l'organe de fermeture ou d'occultation,
- une source d'énergie électrique délivrant une tension électrique continue,
- un circuit électronique d'alimentation, pour alimenter le moteur électrique à partir de la source d'énergie électrique en fonction d'ordres de commande,
- un circuit de commande principal, associé à un premier récepteur de signaux de commande, et adapté pour générer, à partir des signaux de commande reçus, des ordres de commande adressés au circuit électronique d'alimentation,
- une télécommande, adaptée pour générer et émettre par voie aérienne les signaux de commande à destination du premier récepteur de signaux de commande,
dans lequel le dispositif de commande de motorisation comprend en outre :
- un circuit de commande auxiliaire, conformé pour rester en éveil en permanence et comprenant une mémoire apte à mémoriser un signal de commande,
- un émetteur-récepteur de signaux de commande, conformé pour rester en éveil dans un mode réception pour recevoir un signal de commande provenant de la télécommande et pour transmettre ledit signal de commande au circuit de commande auxiliaire, qui le mémorise,
- le circuit de commande auxiliaire étant en outre conformé pour établir l'alimentation du circuit de commande principal et du circuit électronique d'alimentation après réception et mémorisation dudit signal de commande,
- le circuit de commande auxiliaire étant en outre conformé pour mettre l'émetteur-récepteur de signaux de commande dans un mode émission et lui commander l'émission, à destination du premier récepteur de signaux de commande, d'une copie identique du signal de commande mémorisé,
- le circuit de commande auxiliaire étant en outre conformé pour remettre l'émetteur-récepteur de signaux de commande dans son mode réception, et pour inhiber l'alimentation du circuit de commande principal et du circuit électronique d'alimentation après l'exécution des ordres de commande faisant suite audit signal de commande reçu sur l'émetteur-récepteur de signaux de commande et aussi longtemps qu'aucun nouveau signal n'est reçu sur l'émetteur-récepteur de signaux de commande.

De la sorte, en l'absence de signaux de commande émis par la télécommande, le dispositif de commande de motorisation reste dans un état de veille, dans lequel seuls le circuit de commande auxiliaire et l'émetteur-récepteur de signaux de commande restent alimentés à partir de la source d'énergie électrique. Il en résulte que la consommation d'énergie électrique est très fortement réduite, puisque la plus grande partie des composants électroniques du circuit de commande de motorisation sont maintenus hors tension.

En outre, du fait que le circuit de commande auxiliaire et l'émetteur-récepteur de signaux de commande restent alimentés en permanence, ces derniers sont capables de recevoir, de reconnaître et de mémoriser un signal de commande dès qu'il est émis par la télécommande, sans qu'il soit besoin que l'utilisateur manoeuvre plusieurs fois la télécommande pour que le signal de commande soit reconnu par le dispositif de commande de motorisation.

Également, du fait que le circuit de commande auxiliaire provoque tout d'abord l'alimentation du circuit de commande principal, puis l'envoi d'une copie du signal de commande mémorisé au premier récepteur de signaux de commande, le premier récepteur de signaux de commande est capable de recevoir et de reconnaître la trame du signal de commande, pour générer les ordres de commande correspondants et les adresser au circuit électronique d'alimentation qui lui-même est également alimenté et peut alimenter le moteur électrique à partir de la source d'énergie électrique en fonction des ordres de commande.

Enfin, après l'exécution des ordres de commande, la consommation du dispositif de commande de motorisation est à nouveau réduite, par le fait que le circuit de commande auxiliaire remet l'émetteur-récepteur de signaux de commande dans son mode de réception, et inhibe l'alimentation du circuit de commande principal et du circuit électronique d'alimentation.

En pratique, le circuit de commande auxiliaire peut commander l'émission de ladite copie identique du signal de commande mémorisé à destination du premier récepteur de signaux de commande après un temps d'attente prédéterminé qui est choisi supérieur au temps nécessaire pour que, après établissement de son alimentation, le premier récepteur de signaux de commande puisse reconnaître la trame de ladite copie identique du signal de commande provenant de l'émetteur-récepteur de signaux de commande.

Le circuit de commande auxiliaire et l'émetteur-récepteur de signaux de commande sont de préférence des circuits électroniques à faible consommation, ne nécessitant pas de présenter un état de veille à consommation réduite, qui peuvent donc être alimentés en permanence sans que cela affecte sensiblement l'autonomie du dispositif de commande de motorisation d'organe de fermeture ou d'occultation.

En pratique, le circuit de commande auxiliaire peut avantageusement être réalisé sur la base d'un microcontrôleur programmé.

Selon un premier mode de réalisation, l'émetteur-récepteur de signaux de commande peut être conformé pour transmettre par voie aérienne au premier récepteur de signaux de commande ladite copie identique du signal de commande mémorisé. De la sorte, on peut utiliser, sans le modifier, un premier récepteur de signaux de commande connu déjà adapté pour la commande du moteur électrique.

Selon un second mode de réalisation, l'émetteur-récepteur de signaux de commande peut être connecté au premier récepteur de signaux de commande par une liaison conductrice pour transmettre par conduction au premier récepteur de signaux de commande ladite copie identique du signal de commande mémorisé.

Grâce à la faible consommation en veille du dispositif de commande de motorisation, il est possible d'utiliser comme source d'énergie électrique, selon un mode de réalisation de la présente invention, une batterie d'accumulateurs alimentée à partir d'un panneau solaire photovoltaïque, en présentant une autonomie de durée suffisante, et sans avoir à surdimensionner la batterie d'accumulateurs devant être logée dans le caisson de motorisation de l'organe d'occultation.

Du fait de la faible consommation en veille du dispositif de commande de motorisation, la présente invention procure encore un intérêt dans un mode de réalisation dans lequel le dispositif est alimenté à partir du réseau de distribution d'énergie électrique, en permettant de réduire la consommation d'énergie électrique.

Dans le but de fournir un couple d'entraînement suffisant pour la motorisation de tous types d'organes d'occultation, il est avantageux de prévoir que :
- le moteur électrique est un moteur à courant alternatif basse tension ayant une tension électrique efficace dans la plage comprise entre 50 et 1000 V, avantageusement égale à 230 V environ ;
- le panneau solaire photovoltaïque délivre une tension électrique continue inférieure à la tension électrique efficace du moteur électrique,
- la batterie d'accumulateurs présente une tension nominale inférieure à ladite tension électrique efficace du moteur électrique et supérieure à la tension électrique continue délivrée par le panneau solaire photovoltaïque,
- un chargeur DC-DC convertit l'énergie électrique de sortie du panneau solaire photovoltaïque en une énergie électrique à la tension électrique de recharge de la batterie d'accumulateurs,
- le circuit électronique d'alimentation transforme l'énergie électrique de sortie à tension électrique continue de la batterie d'accumulateurs en une énergie électrique à tension alternative de sortie apte à alimenter ledit moteur électrique.

Egalement, dans le but d'optimiser le rendement énergétique, mais également dans le but de réduire la dimension du dispositif pour permettre son insertion dans les tubes de motorisation couramment utilisés, on peut avantageusement prévoir que le circuit électronique d'alimentation comprend deux étages successifs, à savoir d'une part un premier étage sous forme d'un convertisseur DC-DC élévateur de tension qui convertit la tension électrique continue de la batterie d'accumulateurs en une tension de sortie continue au minimum équivalente à la tension de crête de l'onde de la tension finale envisagée pour l'alimentation du moteur électrique, et d'autre part un deuxième étage sous forme d'un convertisseur DC-AC qui transforme la tension de sortie continue du premier étage en une tension alternative sinusoïdale apte à alimenter le moteur électrique.

Le premier étage DC-DC peut comprendre un pont en H de commutateurs électroniques, dont les points d'entrée sont aux bornes de la batterie d'accumulateurs, et dont les points de jonction alimentent le primaire d'un transformateur élévateur de tension dont le secondaire alimente un élément redresseur fournissant ladite tension de sortie continue. Le transformateur élévateur de tension peut être un transformateur planaire apte à fonctionner à haute fréquence, de façon que son volume soit réduit et que son rendement soit élevé. Un fonctionnement à 50 kHz environ peut être avantageux pour minimiser les pertes à la fois dans le transformateur et dans les commutateurs électroniques.

Le second étage DC-DC peut comprendre un pont en H de commutateurs électroniques, dont les points d'entrée sont aux bornes de l'élément redresseur, dont les points de jonction alimentent le moteur par l'intermédiaire d'un filtre passe bas, les commutateurs électroniques étant pilotés par un microcontrôleur programmé pour réaliser une modulation de largeur d'impulsions bipolaire produisant aux points de jonction une tension de sortie en créneaux à rapport cyclique variable qui, après filtration par le filtre passe bas, alimente le moteur par une tension monophasée sensiblement sinusoïdale.

Selon un autre aspect, l'invention propose un organe de fermeture ou d'occultation dans un bâtiment, muni d'un dispositif de commande de motorisation tel que défini ci-dessus.

Selon un autre aspect, l'invention propose un procédé pour commander la motorisation d'un organe de fermeture ou d'occultation dans un bâtiment, dans lequel : - au moins un moteur électrique est couplé mécaniquement à l'organe de fermeture ou d'occultation,
- une source d'énergie électrique délivre une tension électrique continue,
- un circuit électronique d'alimentation alimente le moteur électrique à partir de la source d'énergie électrique en fonction d'ordres de commande,
- un circuit de commande principal, alimenté à partir de la source d'énergie électrique, et associé à un premier récepteur de signaux de commande, est adapté pour générer des ordres de commande adressés au circuit électronique d'alimentation,
   - au cours d'une phase d'attente, en attente de réception d'un éventuel signal de commande provenant d'une télécommande, on inhibe l'alimentation des circuits principaux de commande et d'alimentation dudit moteur couplé, et on conserve l'alimentation de circuits électroniques auxiliaires à faible consommation aptes à assurer en permanence la réception et la mémorisation des signaux de commande,
   - au cours d'une phase de réception, les circuits électroniques auxiliaires reçoivent et mémorisent un signal de commande reçu par voie aérienne de la télécommande,
   - au cours d'une phase de réveil, les circuits électroniques auxiliaires mettent en éveil les circuits principaux de commande et d'alimentation,
   - au cours d'une phase de transmission et de commande, les circuits électroniques auxiliaires commandent le rétablissement de l'alimentation des circuits principaux de commande et d'alimentation, puis, après un temps d'attente prédéterminé, transfèrent aux circuits principaux de commande une copie identique du signal de commande précédemment enregistré, lesquels circuits principaux de commande décodent la trame du signal de commande et produisent des ordres de commande correspondants envoyés aux circuits principaux d'alimentation pour alimenter le moteur selon les informations contenues dans la trame du signal de commande,
   - après exécution des ordres de commande, on retourne en phase d'attente aussi longtemps qu'aucun nouveau signal n'est reçu sur l'émetteur-récepteur de signaux de commande.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est un synoptique fonctionnel du dispositif selon un mode de réalisation de la présente invention, illustrant les organes principaux du dispositif ;
[Fig.2] La figure 2 est un schéma électrique d'un chargeur DC-DC selon un mode de réalisation de la présente invention, pour alimenter la batterie d'accumulateurs à partir d'un panneau solaire photovoltaïque ;
[Fig.3] La figure 3 est un schéma électrique d'un convertisseur DC-DC élévateur de tension selon un mode de réalisation de la présente invention, réalisant le premier étage du circuit électronique d'alimentation ;
[Fig.4] La figure 4 est un schéma électrique d'un convertisseur DC-AC réalisant le deuxième étage du circuit électronique d'alimentation selon un mode de réalisation de la présente invention ;
[Fig.5] La figure 5 est un diagramme temporel illustrant la forme d'onde modulée en largeur d'impulsions bipolaire de la tension électrique de sortie du circuit électronique d'alimentation alimentant le moteur électrique à courant alternatif ;
[Fig.6] La figure 6 illustre le positionnement, dans un caisson de motorisation, de la source d'énergie solaire et de l'ensemble des circuits électroniques selon la présente invention pour l'alimentation du moteur d'entraînement d'un organe d'occultation ou de fermeture ;
[Fig.7] La figure 7 est un synoptique fonctionnel simplifié du dispositif, illustrant l'état d'alimentation des organes principaux du dispositif au cours d'une phase d'attente ;
[Fig.8] La figure 8 est un synoptique fonctionnel simplifié du dispositif, illustrant l'état des organes principaux du dispositif au cours d'une phase de réception d'un signal de commande ;
[Fig.9] La figure 9 est un synoptique fonctionnel simplifié du dispositif, illustrant l'état des organes principaux du dispositif au cours d'une phase de réveil ; et
[Fig.10] La figure 10 est un synoptique fonctionnel simplifié du dispositif, illustrant l'état d'alimentation des organes principaux du dispositif au cours d'une phase de transmission et de commande, au cours de laquelle interviennent la transmission d'une copie du signal de commande et l'actionnement du moteur.

### DESCRIPTION DES MODES DE REALISATION PREFERES

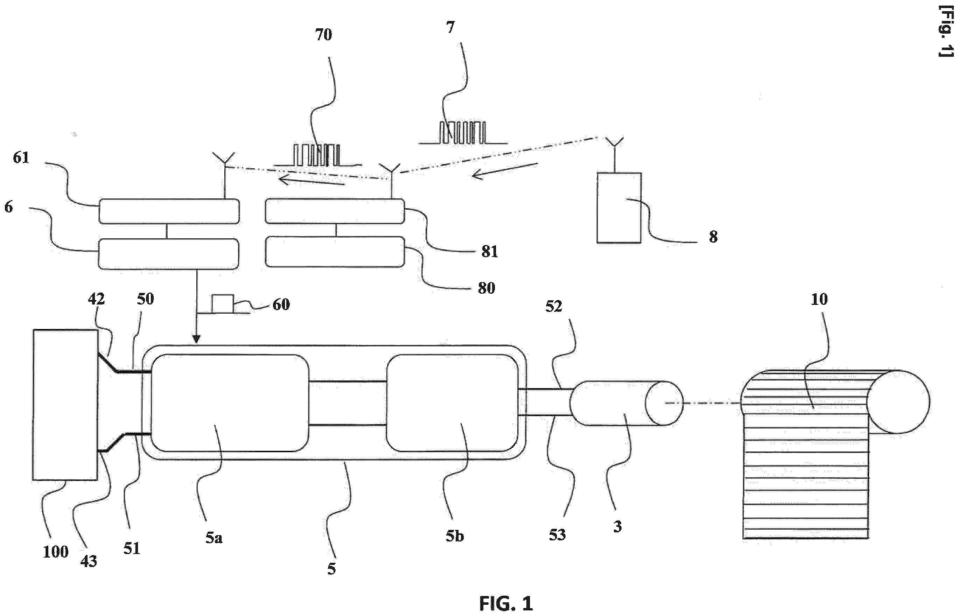

Comme illustré sur la figure 1, le dispositif selon l'invention comprend de façon générale une source d'énergie électrique 100, un circuit électronique d'alimentation 5, à deux étages 5a et 5b, et un moteur électrique à courant alternatif 3 couplé mécaniquement à un organe d'occultation 10.

Sur sollicitation d'un utilisateur, une télécommande 8 envoie, par voie aérienne, des signaux de commande 7 destinés à un circuit de commande principal 6 qui les transforme en ordres de commande 60 adressés au circuit électronique d'alimentation 5 pour commander la rotation du moteur 3 dans le sens approprié et pendant une durée appropriée.

Le circuit de commande principal 6 est associé à un premier récepteur de signaux de commande 61 apte à recevoir et reconnaître des signaux de commande 7 provenant de la télécommande 8. Les signaux de commande 7 émis par la télécommande 8 sont sous forme codée, constitués d'un train d'impulsions selon une trame prédéfinie de quelques dizaines de millisecondes, afin de ne pas être confondus avec d'autres signaux provenant de l'environnement. Le code est tournant, c'est-à-dire qu'il est modifié à chaque signal de commande. Les signaux de commande 7 sont destinés à être ensuite décodés par le circuit de commande principal 6 pour être transformés en ordres de commande 60.

Selon la présente invention, le premier récepteur de signaux de commande 61, le circuit de commande principal 6 et le circuit électronique d'alimentation, formant un ensemble de commande, peuvent être des circuits connus et utilisés habituellement pour la commande d'actionnement d'un organe de fermeture ou d'occultation 10 dans un bâtiment. Autrement dit, l'invention peut trouver application dans une modification simple des dispositifs de commande de motorisation connus, par ajout de circuits supplémentaires permettant d'en réduire la consommation d'énergie électrique et d'en augmenter ainsi l'autonomie.

Pour remplir la double fonction de réduction de la consommation d'énergie électrique et de fiabilisation de la reconnaissance du code des signaux de commande 7 sans que l'utilisateur soit obligé de solliciter plusieurs fois la télécommande 8, la présente invention comprend des circuits supplémentaires, à savoir un émetteur-récepteur de signaux de commande 81 et un circuit de commande auxiliaire 80.

Dans le mode de réalisation illustré sur les figures, chaque signal de commande 7 est en réalité capté par l'émetteur-récepteur de signaux de commande 81, qui le transmet au circuit de commande auxiliaire 80 qui le mémorise. Le circuit de commande auxiliaire 80 est adapté pour transmettre ensuite une copie 70 du signal de commande 7 à l'émetteur-récepteur de signaux de commande 81, qui la transmet au premier récepteur de signaux de commande 61 pour qu'elle soit transformée en ordres de commande 60 par le circuit de commande principal 6.

Dans le mode de réalisation illustré sur la figure 1, la transmission de la copie 70 du signal de commande mémorisé 7 depuis l'émetteur-récepteur de signaux de commande 81 jusqu'au premier récepteur de signaux de commande 61 se fait par voie aérienne.

En alternative, l'émetteur-récepteur de signaux de commande 81 peut être connecté au premier récepteur de signaux de commande 61 par une liaison conductrice transmettant par conduction au premier récepteur de signaux de commande 61 la copie 70 du signal de commande mémorisé 7.

Le circuit de commande auxiliaire 80 remplit ainsi tout d'abord la fonction de mémorisation du signal de commande 7 reçu de l'émetteur-récepteur de signaux de commande 81, ainsi que la fonction de commande de l'émetteur-récepteur de signaux de commande 81 pour le mettre soit dans un mode réception lui permettant de recevoir le signal de commande 7 émis par la télécommande 8, soit dans un mode émission lui permettant d'émettre la copie 70 du signal de commande 7 à destination du premier récepteur de signaux de commande 61.

Le circuit de commande auxiliaire 80 remplit en outre la fonction essentielle de pilotage de l'alimentation de la plupart des circuits électriques et électroniques du dispositif de commande de motorisation, à savoir le premier récepteur de signaux de commande 61, le circuit de commande principal 6, et le circuit électronique d'alimentation 5.

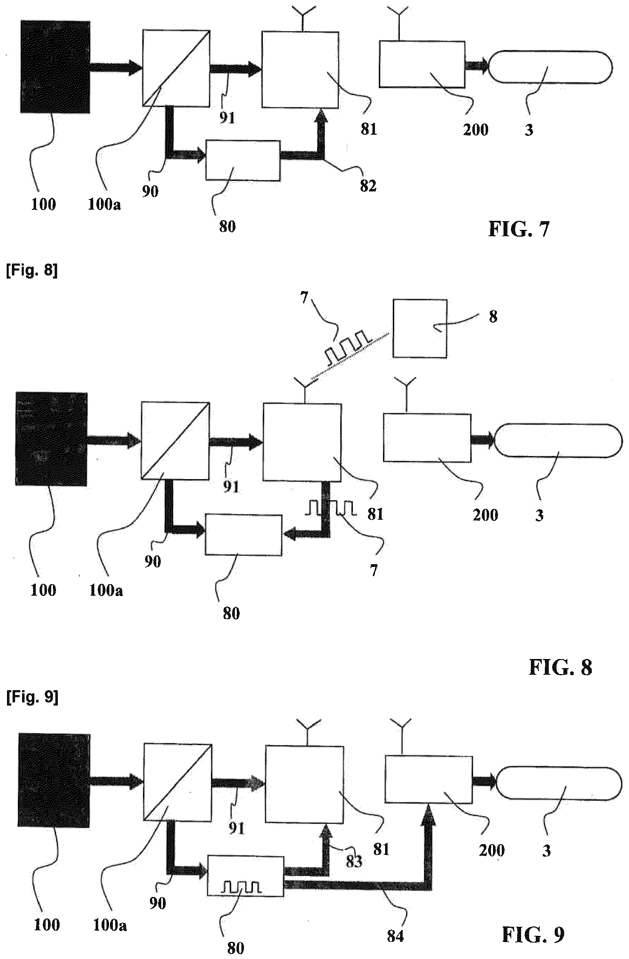

Les fonctions du circuit de commande auxiliaire 80 sont illustrées sur les figures 7 à 10, auxquelles il convient maintenant de se référer. On retrouve, sur chacune de ces figures, les organes essentiels du dispositif de commande de motorisation, à savoir la source d'énergie électrique 100, un ensemble de commande 200, le moteur électrique 3, le circuit de commande auxiliaire 80 et l'émetteur-récepteur de signaux de commande 81.

L'ensemble de commande 200 comprend, de façon synthétique, les éléments connus illustrés sur la figure 1, à savoir le premier récepteur de signaux de commande 61, le circuit de commande principal 6 et le circuit électronique d'alimentation 5, qui constituent les circuits électroniques principaux de commande et d'alimentation.

Le circuit de commande auxiliaire 80 et l'émetteur-récepteur de signaux de commande 81 constituent des circuits électroniques auxiliaires à faible consommation, alimentés en permanence à partir de la source d'énergie électrique 100, et qui sont ainsi aptes à assurer en permanence la réception et la mémorisation des signaux de commande 7.

Sur la figure 7, on a illustré l'état du dispositif de commande de motorisation au cours d'une phase d'attente, en attente de réception d'un éventuel signal de commande provenant d'une télécommande. Au cours de cette phase d'attente, le circuit de commande auxiliaire 80 envoie à l'émetteur-récepteur de signaux de commande 81 un signal 82 qui le place dans le mode réception. Simultanément, au cours de cette phase d'attente, le circuit de commande auxiliaire 80 commande la coupure de la connexion électrique entre la source d'énergie électrique 100 et l'ensemble de commande 200, de façon à inhiber l'alimentation des circuits électroniques principaux de commande et d'alimentation (le premier récepteur de signaux de commande 61, le circuit de commande principal 6, et le circuit électronique d'alimentation 5). Pendant cette phase d'attente, comme illustré par les flèches de référence 90 et 91, seuls le circuit de commande auxiliaire 80 et l'émetteur-récepteur de signaux de commande 81 sont alimentés à partir de la source d'énergie électrique 100. En pratique, cette alimentation se fait par l'intermédiaire d'un convertisseur DC-DC 100a approprié, étant observé que l'alimentation des circuits électroniques basses puissance du circuit de commande auxiliaire 80 et de l'émetteur-récepteur de signaux de commande 81 nécessite généralement une tension de l'ordre de 3.3 V, alors que la source d'énergie électrique 100 présente une tension plus élevée, par exemple de 28.8 V.

Sur la figure 8, on a illustré l'état du dispositif de commande de motorisation au cours d'une phase de réception d'un signal de commande 7 provenant de la télécommande 8. Au cours de cette phase de réception, l'alimentation électrique des circuits est maintenue comme dans la phase d'attente. À réception du signal de commande 7, l'émetteur-récepteur de signaux de commande 81 transmet le signal de commande 7 au circuit de commande auxiliaire 80, dont la fonction est alors de l'enregistrer.

Sur la figure 9, on a illustré l'état du dispositif de commande de motorisation au cours d'une phase de réveil. Au cours de cette phase de réveil, le circuit de commande auxiliaire 80 envoie à l'émetteur-récepteur de signaux de commande 81 un signal 83 pour le placer en mode émission, et envoie à l'ensemble de commande 200 un signal 84 pour le mettre en éveil.

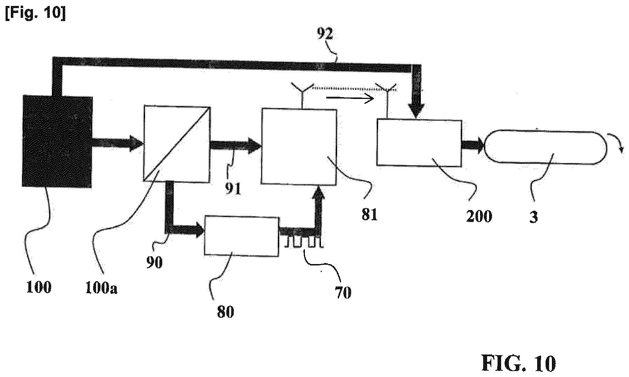

Sur la figure 10, que l'on peut considérer en combinaison avec la figure 1, on a illustré l'état du dispositif de commande de motorisation au cours d'une phase de transmission et de commande. Au cours de cette phase de transmission et de commande, le circuit de commande auxiliaire 80 commande tout d'abord le rétablissement de la connexion électrique entre la source d'énergie électrique 100 et l'ensemble de commande 200, comme indiqué par la flèche 92, de façon à rétablir l'alimentation des circuits électroniques principaux de commande et d'alimentation comprenant le premier récepteur de signaux de commande 61, le circuit de commande principal 6 et le circuit électronique d'alimentation 5. Ensuite, après un temps d'attente prédéterminé qui est choisi supérieur au temps nécessaire pour que, après rétablissement de son alimentation, le premier récepteur de signaux de commande 61 puisse reconnaître la trame des signaux de commande, le circuit de commande auxiliaire 80 transfert à l'émetteur-récepteur de signaux de commande 81 une copie 70 du signal de commande 7 qu'il a précédemment enregistré au cours de la phase de réception, et provoque l'émission, par l'émetteur-récepteur de signaux de commande 81, de cette copie 70 du signal de commande 7 à destination du premier récepteur de signaux de commande 61. De la sorte, cette copie 70 du signal de commande 7 parvient au circuit de commande principal 6, qui en décode la trame et produit les ordres de commande correspondants 60 (figure 1) transmis au circuit électronique d'alimentation 5 pour alimenter le moteur électrique 3 à partir de la source d'énergie électrique 100 et pour provoquer sa rotation dans le sens de rotation approprié et pendant la durée appropriée correspondant aux informations contenues dans la trame du signal de commande 7.

Ensuite, après exécution des ordres de commande 60, le circuit de commande auxiliaire 80 reconfigure l'ensemble en phase d'attente.

Le circuit de commande auxiliaire 80 peut, en pratique, être réalisé à partir d'un microcontrôleur, associé à une mémoire adaptée pour la mémorisation d'au moins un signal de commande 7, et programmé pour exécuter les étapes décrites ci-dessus en relation avec les figures 7 à 10. L'émetteur-récepteur 81 peut être constitué d'un circuit électronique habituellement utilisé pour remplir les fonctions de réception et d'émission d'ondes électromagnétiques à faible distance. Il en résulte alors que le circuit de commande auxiliaire 80 et l'émetteur-récepteur de signaux de commande 81 sont des circuits électroniques à faible consommation, ne nécessitant pas de présenter un état de veille à consommation réduite, et n'affectant pas de façon sensible l'autonomie du dispositif de commande de motorisation malgré leur état d'alimentation permanente.

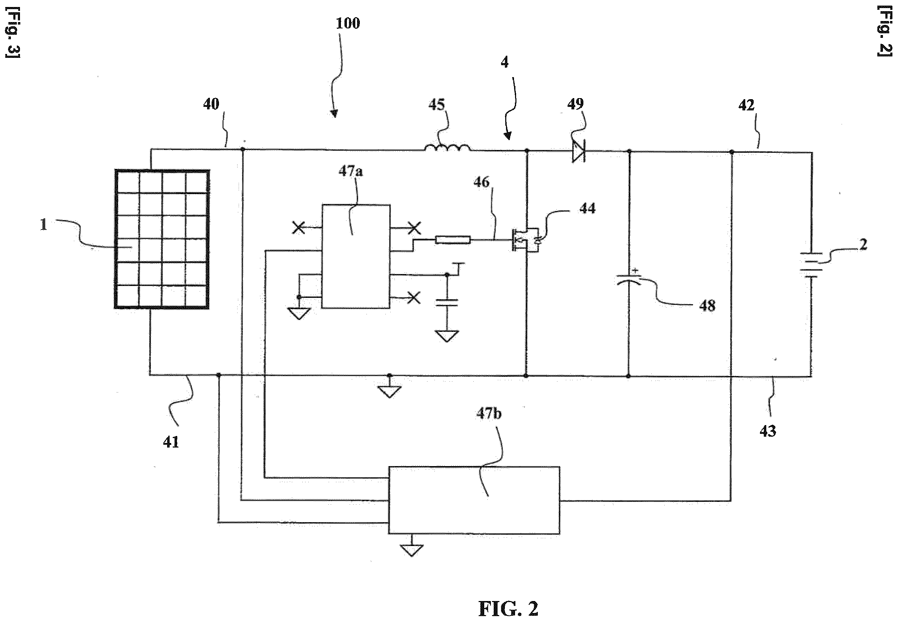

Dans le mode de réalisation illustré sur la figure 2, la source d'énergie électrique 100 comprend un panneau solaire photovoltaïque 1, délivrant directement l'énergie sous forme électrique. La tension de sortie du panneau solaire photovoltaïque 1 est comprise dans une plage de 12 à 18 V environ, à savoir la plage habituelle des tensions de sortie des panneaux solaires photovoltaïques. La puissance de sortie du panneau photovoltaïque doit être la plus grande possible par rapport à la surface faible que l'on veut bien lui allouer. Une puissance typique de l'ordre de 5 ou 6 W crête peut convenir. La technologie utilisée pour le panneau photovoltaïque doit donc être assez performante, par exemple de type monocristalline ou polycristalline.

La source d'énergie électrique 100 comprend en outre une batterie d'accumulateurs 2, alimentée à partir du panneau solaire photovoltaïque 1 par l'intermédiaire d'un chargeur DC-DC 4 qui convertit l'énergie électrique de sortie à tension électrique faible du panneau solaire photovoltaïque 1 en une énergie électrique à tension électrique de recharge plus élevée, de l'ordre de 24 à 30 V environ, de la batterie d'accumulateurs 2.

Le moteur électrique à courant alternatif 3 est d'un type pouvant être alimenté par une tension électrique monophasée efficace dans la plage comprise entre 50 et 1000 volts, avantageusement de l'ordre de 230 V environ, et apte à délivrer un couple nominal de 10 Nm à 80 Nm, par exemple un couple nominal de 50 Nm environ.

La tension nominale de la batterie d'accumulateurs 2 est comprise dans une plage de 24 à 30 V environ, constituant une tension électrique intermédiaire entre la tension nominale délivrée par le panneau solaire photovoltaïque 1 et la tension nominale d'alimentation du moteur électrique 3, permettant d'atteindre plus facilement la tension nécessaire au fonctionnement du moteur électrique 3.

En pratique, dans la batterie d'accumulateurs 2, chaque accumulateur est une batterie Li-lon ayant une tension nominale de 3.6 V et dont la capacité unitaire est de 2600 milliampères heures au minimum. Ainsi, la batterie d'accumulateurs 2 peut être réalisée par exemple par la mise en série de 8 accumulateurs de 3.6 V.

Pour permettre de recharger la batterie d'accumulateurs 2 à tension nominale comprise entre 24 et 30 volts environ, à partir du panneau solaire photovoltaïque 1 présentant une tension nominale inférieure, de 12 à 18 V environ, le chargeur DC-DC 4 est un circuit électronique élévateur de tension continue.

Dans le mode de réalisation illustré sur la figure 2, le chargeur DC-DC 4 est un convertisseur élévateur de tension, de type hacheur parallèle, dont les bornes d'entrée 40 et 41 sont connectées au panneau solaire photovoltaïque 1, et dont les bornes de sortie 42 et 43 sont connectées à la batterie d'accumulateurs 2. Le chargeur DC-DC 4 comporte un commutateur électronique 44 de type MOSFET (transistor à effet de champ à grille isolée), piloté par un circuit de commande comprenant un microcontrôleur 47b et un circuit de mise en forme 47a. Le circuit source-drain du commutateur électronique 44 est connecté en série avec une inductance 45 aux bornes d'entrée 40 et 41, et sa grille 46 reçoit, par l'intermédiaire du circuit de mise en forme 47a, un signal de commande impulsionnel généré par un microcontrôleur 47b. Un condensateur 48 est connecté aux bornes de sortie 42 et 43, et une diode Schottky 49 est connectée entre le commutateur électronique 44 et le condensateur 48.

Le microcontrôleur 47b comprend un programme enregistré par lequel le microcontrôleur 47b scrute l'information de tension électrique aux bornes d'entrée 40 et 41, scrute l'information de courant électrique débité par le panneau solaire photovoltaïque 1, et pilote la commutation du commutateur électronique 44 de façon à rester le plus près possible du point de puissance maximum du panneau solaire photovoltaïque 1. Ce point de puissance maximum se situe à proximité des 80 % de la tension maximale délivrée par le panneau solaire photovoltaïque 1. Ce programme peut être du type généralement appelé MPPT (maximum Power Point Tracking), bien connu de l'homme du métier dans l'utilisation de panneaux solaires.

Le microcontrôleur 47b est également programmé pour maintenir la tension de recharge des accumulateurs au bon niveau à chaque instant tout en limitant le courant si besoin est, notamment au moment de la recharge au-dessus de 80 % de la pleine charge des accumulateurs composant la batterie d'accumulateurs 2.

Le microcontrôleur 47b peut également être programmé pour équilibrer la charge des accumulateurs qui sont en série dans la batterie d'accumulateurs 2, par la commande de transistors associés à des résistances d'équilibrage qui assurent la décharge du surplus d'énergie des accumulateurs lorsque cela est nécessaire.

Pour permettre d'alimenter le moteur électrique 3 par une tension électrique alternative monophasée de 230 V environ à partir de la batterie d'accumulateurs 2 à tension nominale continue de 24 à 30 V environ, le circuit électronique d'alimentation 5 qui est interposé, entre la batterie d'accumulateurs 2 et le moteur électrique 3 (Figure 1), comprend deux étages successifs 5a et 5b qui transforment l'énergie électrique de sortie à tension électrique continue de la batterie d'accumulateurs 2 en une énergie électrique à tension alternative de sortie apte à alimenter le moteur électrique à courant alternatif 3. Des bornes d'entrée 50 et 51 du circuit électronique d'alimentation 5 sont connectées aux bornes 42 et 43 de la batterie d'accumulateurs 2, tandis que les bornes de sortie 52 et 53 sont connectées au moteur électrique à courant alternatif 3

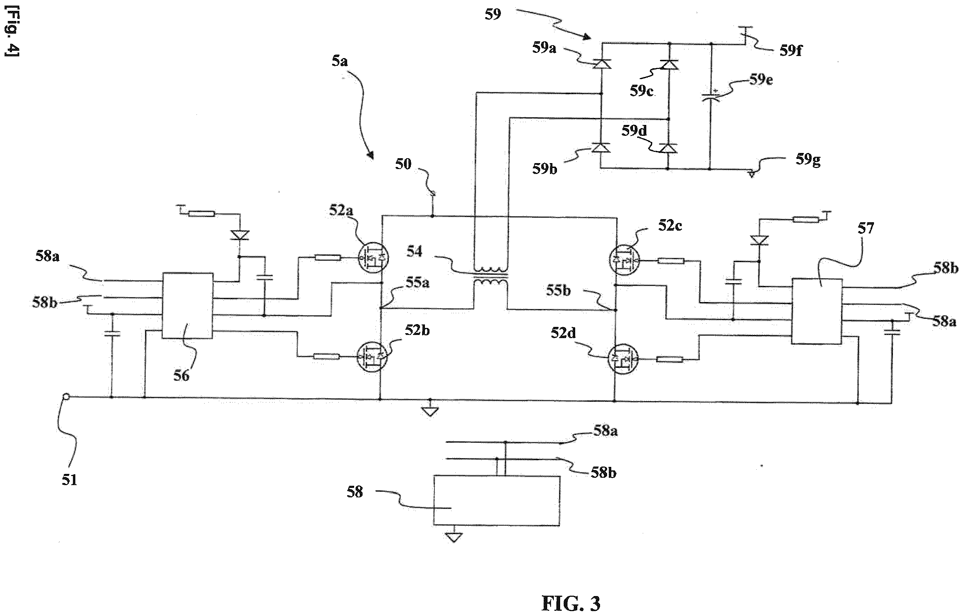

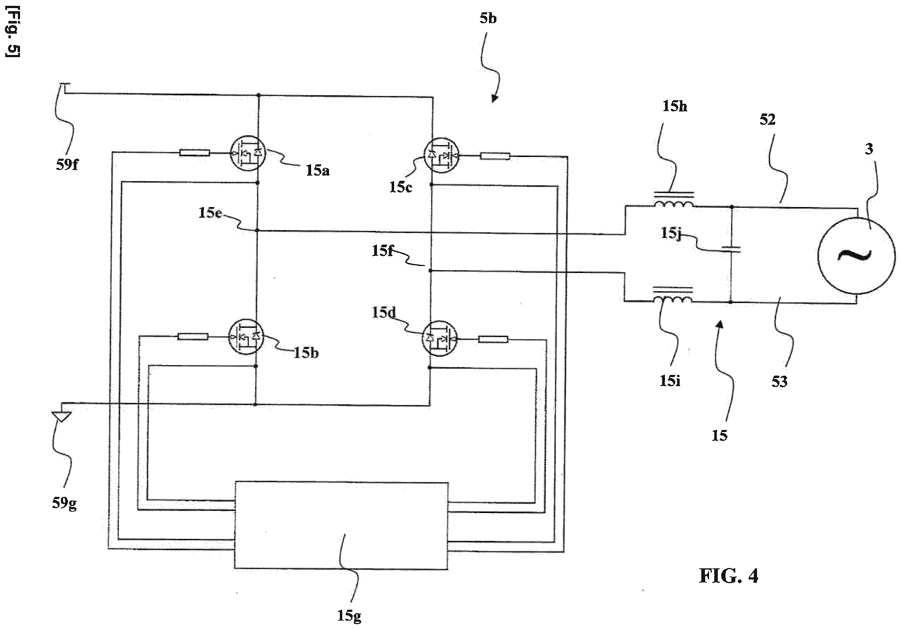

On considère maintenant les figures 3 et 4, qui illustrent un mode de réalisation selon la présente invention pour le circuit électronique d'alimentation 5 permettant d'alimenter le moteur électrique à courant alternatif 3 à partir de l'énergie électrique à tension continue délivrée par la source d'énergie électrique 100.

La figure 3 illustre le premier étage 5a du circuit électronique d'alimentation 5, remplissant la fonction de convertisseur DC-DC élévateur de tension, pour convertir la tension continue relativement basse de la batterie d'accumulateurs 2 en une tension continue de valeur suffisamment élevée, au minimum équivalente à la tension de crête de l'onde de tension alternative finale envisagée pour l'alimentation du moteur électrique à courant alternatif 3.

Dans le mode de réalisation illustré, que l'on peut choisir pour des raisons d'efficacité, le premier étage DC-DC 5a comprend essentiellement un pont en H de quatre commutateurs électroniques 52a, 52b, 52c et 52d, qui sont avantageusement chacun de type MOSFET (transistor à effet de champ à grille isolée). Les commutateurs électroniques 52a et 52b sont tous deux connectés en série entre les bornes d'entrée 50 et 51, et leur point de jonction 55a est connecté à une première borne du primaire d'un transformateur élévateur de tension 54. De même, les commutateurs électroniques 52c et 52d sont tous deux connectés en série entre les bornes d'entrée 50 et 51, et leur point de jonction 55b est connecté à la seconde borne du primaire du transformateur élévateur de tension 54.

Les grilles des commutateurs électroniques 52a, 52b, 52c et 52d reçoivent, par l'intermédiaire de circuits de mise en forme 56 et 57, des signaux de commande impulsionnels générés par un microcontrôleur 58 sur ses sorties 58a et 58b. Le microcontrôleur 58 est programmé pour piloter successivement par sa sortie 58a la conduction du couple de commutateurs électroniques 52a et 52d, puis par sa sortie 58b la conduction du couple de commutateurs électroniques 52b et 52c, produisant sur le primaire du transformateur 54 une alimentation en onde carrée à rapport cyclique 1/1.

Le secondaire du transformateur élévateur de tension 54 est connecté à l'entrée d'un élément redresseur 59, qui dans le mode de réalisation illustré est constitué de quatre diodes 59a, 59b, 59c et 59d, et qui est associé à un ou plusieurs condensateurs de filtrage 59e pour produire sur les bornes de sortie 59f et 59g une tension électrique redressée et filtrée.

Le transformateur élévateur de tension 54 est un transformateur haute fréquence, avantageusement de type planaire, apte à fonctionner à haute fréquence, par exemple à une fréquence de 50 kHz environ. Cela permet une transmission de puissance suffisante avec un transformateur à faible volume et faible encombrement. Dans un tel transformateur planaire, l'enroulement primaire et l'enroulement secondaire peuvent être chacun constitués d'un empilage de bobines élémentaires planes comprenant chacune une ou plusieurs couches de cuivre électriquement isolées les unes des autres et dont les extrémités sont connectées électriquement les unes aux autres, tandis que le circuit magnétique est constitué de noyaux en ferrite assemblés. Des exemples de tels transformateurs planaires sont décrits par exemple dans les documents EP 3300090 A1 ou US 7,663,460 B2. À titre d'exemple, de bons résultats peuvent être obtenus en utilisant un transformateur planaire de référence TP32D2402 produit et commercialisé par la société chinoise Shaanxi Gold-Stone Electronics Co., LTD.

Les commutateurs électroniques 52a, 52b, 52c et 52d fonctionnent à tension relativement réduite, la tension crête étant égale à la tension continue de la batterie d'accumulateurs 2, c'est-à-dire d'environ 24 V à 30 V. Pour produire la puissance nécessaire à l'alimentation du moteur 3, le courant transité doit être assez important, ce qui impose l'utilisation de transistors à effet de champ possédant des caractéristiques très bonnes à l'état passant. D'autre part, ces commutateurs électroniques doivent présenter une vitesse de commutation inférieure ou égale à la descente naturelle du courant lors d'une commutation, de façon à ne pas dissiper trop d'énergie inutilement lors des commutations.

On considère maintenant la figure 4, qui illustre le second étage 5b du circuit électronique d'alimentation 5. Ce second étage 5b est un convertisseur DC-AC qui transforme la tension de sortie continue du premier étage 5a en une tension alternative sinusoïdale apte à alimenter le moteur électrique 3. Dans le mode de réalisation illustré, ce second étage 5b se présente sous forme d'un pont en H constitué de quatre commutateurs électroniques 15a, 15b, 15c et 15d, qui sont avantageusement chacun de type MOSFET (transistor à effet de champ à grille isolée). Les commutateurs électroniques 15a et 15b sont tous deux connectés en série entre les bornes d'entrée 59f et 59g, et leur point de jonction 15e est connecté à une première borne de sortie 52 par l'intermédiaire d'un filtre passe bas 15. De même, les commutateurs électroniques 15c et 15d sont tous deux connectés en série entre les bornes d'entrée 59f et 59g, et leur point de jonction 15f est connecté à la seconde borne de sortie 53 par l'intermédiaire du même filtre passe bas 15.

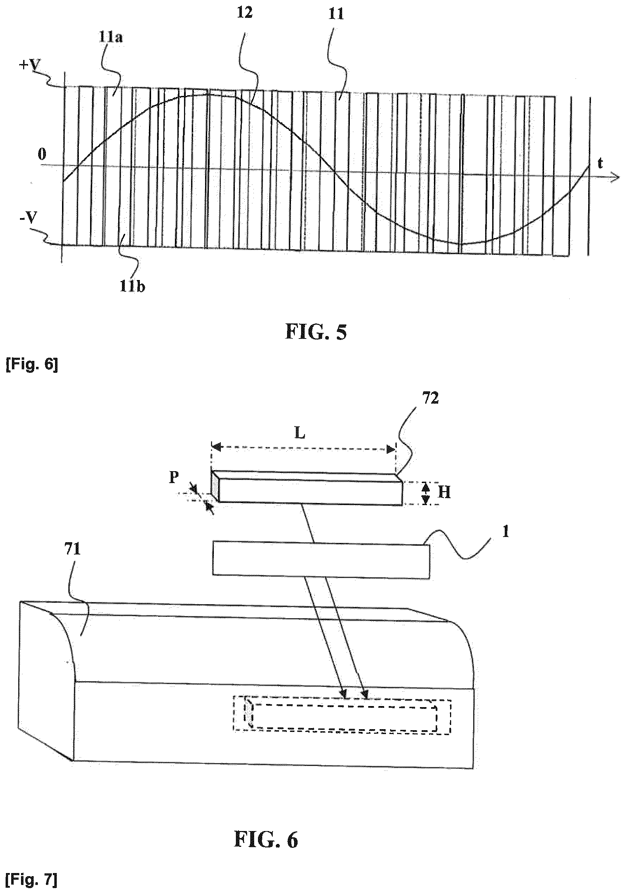

Les grilles des commutateurs électroniques 15a, 15b, 15c et 15d reçoivent des signaux de commande impulsionnels générés par un microcontrôleur 15g sur ses sorties respectives. Le microcontrôleur 15g est programmé pour piloter successivement la conduction du couple de commutateurs électroniques 15a et 15d pour générer en sortie une impulsion positive 11a, puis la conduction du couple de commutateurs électroniques 15b et 15c pour générer en sortie une impulsion négative 11b, avec une modulation de largeur d'impulsions bipolaire produisant aux points de jonction 15e et 15f une tension de sortie 11 en créneaux à rapport cyclique variable telle qu'illustrée sur la figure 5.

Le filtre passe bas 15 peut par exemple comprendre une première inductance 15h en série entre le point de jonction 15e et la borne de sortie 52, une seconde inductance 15i en série entre le point de jonction 15f et la borne de sortie 53, et un condensateur 15j entre les bornes de sortie 52 et 53. En sortie du filtre 15, la tension appliquée au moteur 3 est proche d'une sinusoïde, comme illustré par la courbe 12 sur la figure 5.

La figure 6 illustre un caisson de motorisation 71 d'organe d'occultation ou de fermeture, l'emplacement du panneau photovoltaïque 1 en surface du caisson de motorisation 71, et l'emplacement de l'ensemble électronique 72 composé de la batterie d'accumulateurs et des différents circuits électroniques précédemment décrits, permettant l'alimentation et la commande du moteur électrique à courant alternatif à tension nominale de 230 V pour l'entraînement d'un organe d'occultation ou de fermeture.

Grâce aux choix technologiques précédemment décrits, l'ensemble électronique 72 est particulièrement peu encombrant, occupant un volume sensiblement parallélépipédique ayant une longueur L inférieure ou égale à 350 mm, une hauteur H d'environ 70 mm, une profondeur P d'environ 20 mm.

Cela permet de loger l'ensemble électronique 72 à l'intérieur du caisson de motorisation 71, en position adjacente au panneau photovoltaïque 1 qui elle-même est en surface du caisson de motorisation 71.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de commande de motorisation d'organe de fermeture ou d'occultation (10) dans un bâtiment, comprenant :
- au moins un moteur électrique (3) couplé mécaniquement à l'organe de fermeture ou d'occultation (10),
- une source d'énergie électrique (100) délivrant une tension électrique continue,
- un circuit électronique d'alimentation (5), pour alimenter le moteur électrique (3) à partir de la source d'énergie électrique (100) en fonction d'ordres de commande (60),
- un circuit de commande principal (6), alimenté à partir de la source d'énergie électrique (100), associé à un premier récepteur de signaux de commande (61), et adapté pour générer des ordres de commande (60) adressés au circuit électronique d'alimentation (5),
- une télécommande (8), adaptée pour générer et émettre par voie aérienne les signaux de commande (7) à destination du premier récepteur de signaux de commande (61),
**caractérisé en ce que** le dispositif de commande de motorisation comprend en outre :
- un circuit de commande auxiliaire (80), conformé pour rester en éveil en permanence et comprenant une mémoire apte à mémoriser un signal de commande (7),
- un émetteur-récepteur de signaux de commande (81), conformé pour rester en éveil dans un mode réception pour recevoir un signal de commande (7) reçu de la télécommande (8) et pour transmettre ledit signal de commande (7) au circuit de commande auxiliaire (80), qui le mémorise,
- le circuit de commande auxiliaire (80) étant en outre conformé pour établir l'alimentation du circuit de commande principal (6) et du circuit électronique d'alimentation (5) après réception et mémorisation dudit signal de commande (7),
- le circuit de commande auxiliaire (80) étant en outre conformé pour mettre l'émetteur-récepteur de signaux de commande (81) dans un mode émission et lui commander l'émission, à destination du premier récepteur de signaux de commande (61), d'une copie identique (70) dudit signal de commande (7) mémorisé,
- le circuit de commande auxiliaire (80) étant en outre conformé pour remettre l'émetteur-récepteur de signaux de commande (81) dans son mode réception, et pour inhiber l'alimentation du circuit de commande principal (6) et du circuit électronique d'alimentation (5) après l'exécution des ordres de commande (60) faisant suite audit signal de commande (7) reçu sur l'émetteur-récepteur de signaux de commande (81) et aussi longtemps qu'aucun nouveau signal n'est reçu sur l'émetteur-récepteur de signaux de commande (81).

2. Dispositif de commande de motorisation selon la revendication 1, **caractérisé en ce que** le circuit de commande auxiliaire (80) commande l'émission de ladite copie identique (70) du signal de commande (7) mémorisé à destination du premier récepteur de signaux de commande (61) après un temps d'attente prédéterminé qui est choisi supérieur au temps nécessaire pour que, après établissement de son alimentation, le premier récepteur de signaux de commande (61) puisse reconnaître ladite copie identique (70) du signal de commande (7) provenant de l'émetteur-récepteur de signaux de commande (81).

3. Dispositif de commande de motorisation selon l'une ou l'autre des revendications 1 et 2, **caractérisé en ce que** le circuit de commande auxiliaire (80) et l'émetteur-récepteur de signaux de commande (81) sont des circuits électroniques à faible consommation, ne nécessitant pas de présenter un état de veille à consommation réduite.

4. Dispositif de commande de motorisation selon l'une quelconque des revendications 1 à 3, **caractérisé en ce que** le circuit de commande auxiliaire (80) comprend un microcontrôleur programmé.

5. Dispositif de commande de motorisation selon l'une quelconque des revendications 1 à 4, **caractérisé en ce que** l'émetteur-récepteur de signaux de commande (81) est conformé pour transmettre par voie aérienne au premier récepteur de signaux de commande (61) ladite copie identique (70) du signal de commande mémorisé (7).

6. Dispositif de commande de motorisation selon l'une quelconque des revendications 1 à 4, **caractérisé en ce que** l'émetteur-récepteur de signaux de commande (81) est connecté au premier récepteur de signaux de commande (61) par une liaison conductrice pour transmettre par conduction au premier récepteur de signaux de commande (61) ladite copie identique (70) du signal de commande mémorisé (7).

7. Dispositif de commande de motorisation selon l'une quelconque des revendications 1 à 6, **caractérisé en ce que** la source d'énergie électrique (100) est une batterie d'accumulateurs (2) alimentée à partir d'un panneau solaire photovoltaïque (1).

8. Dispositif de commande de motorisation selon la revendication 7, **caractérisé en ce que** :
- le moteur électrique (3) est un moteur à courant alternatif basse tension ayant une tension électrique efficace dans la plage comprise entre 50 et 1000 V, avantageusement égale à 230 V environ ;
- le panneau solaire photovoltaïque (1) délivre une tension électrique continue inférieure à la tension électrique efficace du moteur électrique (3),
- la batterie d'accumulateurs (2) présente une tension nominale inférieure à ladite tension électrique efficace du moteur électrique (3) et supérieure à la tension électrique continue délivrée par le panneau solaire photovoltaïque (1),
- un chargeur DC-DC (4) convertit l'énergie électrique de sortie du panneau solaire photovoltaïque (1) en une énergie électrique à la tension électrique de recharge de la batterie d'accumulateurs (2),
- le circuit électronique d'alimentation (5) transforme l'énergie électrique de sortie à tension électrique continue de la batterie d'accumulateurs (2) en une énergie électrique à tension alternative de sortie apte à alimenter ledit moteur électrique (3).

9. Dispositif de commande de motorisation selon l'une quelconque des revendications 1 à 8, **caractérisé en ce que** le circuit électronique d'alimentation (5) comprend un premier étage (5a) sous forme d'un convertisseur DC-DC élévateur de tension qui convertit la tension électrique continue de la batterie d'accumulateurs (2) en une tension de sortie continue au minimum équivalente à la tension de crête de l'onde de la tension finale envisagée pour l'alimentation du moteur électrique (3), et comprend un deuxième étage (5b) sous forme d'un convertisseur DC-AC qui transforme la tension de sortie continue du premier étage (5a) en une tension alternative sinusoïdale apte à alimenter le moteur électrique (3).

10. Dispositif de commande de motorisation selon la revendication 9, **caractérisé en ce que** le premier étage DC-DC (5a) comprend un pont en H de commutateurs électroniques (52a, 52b, 52c, 52d), dont les points d'entrée (50, 51) sont aux bornes de la batterie d'accumulateurs (2), et dont les points de jonction (55a, 55b) alimentent le primaire d'un transformateur élévateur de tension (54) dont le secondaire alimente un élément redresseur (59) fournissant ladite tension de sortie continue.

11. Dispositif de commande de motorisation selon la revendication 10, **caractérisé en ce que** le transformateur élévateur de tension (54) est un transformateur planaire apte à fonctionner à haute fréquence.

12. Dispositif de commande de motorisation selon la revendication 11, **caractérisé en ce que** le pont en H du premier étage DC-DC (5a) fonctionne à une fréquence de 50 kHz environ.

13. Dispositif de commande de motorisation selon l'une quelconque des revendications 9 à 12, **caractérisé en ce que** le second étage DC-AC (5b) comprend un pont en H de commutateurs électroniques (15a, 15b, 15c, 15d), dont les points d'entrée (59f, 59g) sont aux bornes de l'élément redresseur (59), dont les points de jonction (15e, 15f) alimentent le moteur (3) par l'intermédiaire d'un filtre passe bas (15), les commutateurs électroniques (15a, 15b, 15c, 15d) étant pilotés par un microcontrôleur (15g) programmé pour réaliser une modulation de largeur d'impulsions bipolaire produisant aux points de jonction (15e et 15f) une tension de sortie (11) en créneaux à rapport cyclique variable qui, après filtration par le filtre passe bas (15), alimente le moteur (3) par une tension monophasée sensiblement sinusoïdale (12).

14. Organe de fermeture ou d'occultation dans un bâtiment, muni d'un dispositif de commande de motorisation selon l'une quelconque des revendications 1 à 13.

15. Procédé pour commander la motorisation d'un organe de fermeture ou d'occultation (10) dans un bâtiment, dans lequel :
- au moins un moteur électrique (3) est couplé mécaniquement à l'organe de fermeture ou d'occultation (10),
- une source d'énergie électrique (100) délivre une tension électrique continue,
- un circuit électronique d'alimentation (5) alimente le moteur électrique (3) à partir de la source d'énergie électrique (100) en fonction d'ordres de commande (60),
- un circuit de commande principal (6), alimenté à partir de la source d'énergie électrique (100), et associé à un premier récepteur de signaux de commande (61), est adapté pour générer des ordres de commande (60) adressés au circuit électronique d'alimentation (5),
- au cours d'une phase d'attente, en attente de réception d'un éventuel signal de commande (7) provenant d'une télécommande (8), on inhibe l'alimentation des circuits principaux de commande (61, 6) et d'alimentation (5) dudit moteur (3), et on conserve l'alimentation de circuits électroniques auxiliaires (80, 81) à faible consommation aptes à assurer en permanence la réception et la mémorisation des signaux de commande (7),
- au cours d'une phase de réception, les circuits électroniques auxiliaires (80, 81) reçoivent et mémorisent un signal de commande (7) reçu par voie aérienne de la télécommande (8),
- au cours d'une phase de réveil, les circuits électroniques auxiliaires (80, 81) mettent en éveil les circuits principaux de commande (61, 6) et d'alimentation (5),
- au cours d'une phase de transmission et de commande, les circuits électroniques auxiliaires (80, 81) commandent le rétablissement de l'alimentation des circuits principaux de commande (61, 6) et d'alimentation (5), puis, après un temps d'attente prédéterminé, transfèrent aux circuits principaux de commande (61, 6) une copie identique (70) du signal de commande (7) précédemment enregistré, lesquels circuits principaux de commande (61, 6) décodent la trame du signal de commande (7) et produisent des ordres de commande correspondants (60) envoyés aux circuits principaux d'alimentation (5) pour alimenter le moteur (3) selon les informations contenues dans la trame du signal de commande (7),
- après exécution des ordres de commande (60), on retourne en phase d'attente aussi longtemps qu'aucun nouveau signal n'est reçu sur l'émetteur-récepteur de signaux de commande (81).

## Patentansprüche

1. Vorrichtung zur Steuerung eines Antriebs eines Schließ- oder Beschattungselements (10) in einem Gebäude, umfassend:
- mindestens einen Elektroantrieb (3), der mechanisch mit dem Schließ- oder Beschattungselement (10) gekoppelt ist,
- eine elektrische Energiequelle (100), die eine elektrische Gleichspannung liefert,
- eine elektronische Stromversorgung (5) zur Versorgung des Elektroantriebs (3) aus der elektrischen Energiequelle (100) in Abhängigkeit von Steuerbefehlen (60),
- eine Hauptsteuerschaltung (6), die, von der elektrischen Energiequelle (100) versorgt, mit einem ersten Steuersignalempfänger (61) verbunden ist und dazu geeignet ist, Steuerbefehle (60) zu erzeugen, die an die elektronische Stromversorgung (5) gerichtet sind,
- eine Fernsteuerung (8), die dazu geeignet ist, die Steuersignale (7) über die Luft zu erzeugen und an den ersten Steuersignalempfänger (61) zu übertragen,
**dadurch gekennzeichnet, dass** die Vorrichtung zur Steuerung des Antriebs ferner Folgendes umfasst:
- eine Hilfssteuerschaltung (80), die ausgelegt ist, ständig in Bereitschaft zu bleiben, und die einen Speicher umfasst, der in der Lage ist, ein Steuersignal (7) zu speichern,
- einen Steuersignal-Sendeempfänger (81), der so ausgelegt ist, dass er in einem Empfangsmodus in Bereitschaft bleibt, um ein von der Fernsteuerung (8) empfangenes Steuersignal (7) zu empfangen und besagtes Steuersignal (7) an die Hilfssteuerung (80) der Schaltung zu übertragen, die es speichert,
- die Hilfssteuerschaltung (80), die ferner so ausgelegt ist, dass sie nach Empfang und Speicherung besagten Steuersignals (7) die Stromversorgung der Hauptsteuerschaltung (6) und der elektronischen Stromversorgung (5) herstellt,
- die Hilfssteuerschaltung (80), die ferner so ausgelegt ist, dass sie den Steuersignal-Sendeempfänger (81) in einen Sendemodus versetzt und ihn ansteuert, eine identische Kopie (70) des besagten gespeicherten Steuersignals (7) an den ersten Steuersignalempfänger (61) zu senden,
- die Hilfssteuerschaltung (80), die ferner so ausgelegt ist, dass sie den Steuersignal-Sendeempfänger (81) in seinen Empfangsmodus zurückversetzt und die Stromversorgung der Hauptsteuerschaltung (6) und der elektronischen Stromversorgung (5) nach Ausführung der Steuerbefehle (60), die auf das an dem Steuersignal-Sendeempfänger (81) empfangenen besagten Steuersignal (7) folgen, sperrt, solange kein neues Signal am Steuersignal-Sendeempfänger (81) empfangen wird.

2. Vorrichtung zur Steuerung des Antriebs nach Anspruch 1, **dadurch gekennzeichnet, dass** die Hilfssteuerschaltung (80) das Senden besagter identischer Kopie (70) des gespeicherten Steuersignals (7) an den ersten Steuersignalempfänger (61) nach einer vorab festgelegten Wartezeit steuert, die größer gewählt ist als die Zeit, die erforderlich ist, damit der erste Steuersignalempfänger (61) nach Herstellung seiner Stromversorgung besagte identische Kopie (70) des Steuersignals (7) vom Steuersignal-Sendeempfänger (81) erkennen kann.

3. Vorrichtung zur Steuerung des Antriebs nach einem der Ansprüche 1 und 2, **dadurch gekennzeichnet, dass** die Hilfssteuerschaltung (80) und der Steuersignal-Sendeempfänger (81) elektronische Schaltungen mit geringem Verbrauch sind, die es nicht erforderlich machen, einen verbrauchsreduzierten Standby-Zustand zu haben.

4. Vorrichtung zur Steuerung des Antriebs nach einem der Ansprüche 1 bis 3, **dadurch gekennzeichnet, dass** die Hilfssteuerschaltung (80) einen programmierten Mikrocontroller umfasst.

5. Vorrichtung zur Steuerung des Antriebs nach einem der Ansprüche 1 bis 4, **dadurch gekennzeichnet, dass** der Steuersignal-Senderempfänger (81) so ausgelegt ist, dass er besagte identische Kopie (70) des gespeicherten Steuersignals (7) über die Luft an den ersten Steuersignalempfänger (61) überträgt.

6. Vorrichtung zur Steuerung des Antriebs nach einem der Ansprüche 1 bis 4, **dadurch gekennzeichnet, dass** der Steuersignal-Senderempfänger (81) mit dem ersten Steuersignalempfänger (61) durch eine leitende Verbindung zur leitungsgebundenen Übertragung besagter identischen Kopie (70) des gespeicherten Steuersignals (7) an den ersten Steuersignalempfänger (61) verbunden ist.

7. Vorrichtung zur Steuerung des Antriebs nach einem der Ansprüche 1 bis 6, **dadurch gekennzeichnet, dass** die elektrische Energiequelle (100) eine Energiespeicherbatterie (2) ist, die von einem Photovoltaik-Solarpanel (1) versorgt ist.

8. Vorrichtung zur Steuerung des Antriebs nach Anspruch 7, **dadurch gekennzeichnet, dass**:
- der Elektroantrieb (3) ein Antrieb mit Niederspannungs-Wechselstrom mit einer effektiven elektrischen Spannung im Bereich zwischen 50 und 1000 V, vorteilhafterweise gleich etwa 230 V; ist,
- das Photovoltaik-Solarpanel (1) eine elektrische Gleichspannung liefert, die niedriger ist als die effektive elektrische Spannung des Elektroantriebs (3),
- die Energiespeicherbatterie (2) eine Nennspannung aufweist, die niedriger ist als besagte effektive elektrische Spannung des Elektroantriebs (3) und höher als die von dem Photovoltaik-Solarpanel (1) gelieferte elektrische Gleichspannung.
- ein DC-DC-Ladegerät (4) die elektrische Ausgangsenergie des Photovoltaik-Solarpanels (1) in elektrische Energie mit der elektrischen Spannung zum Wiederaufladen der Energiespeicherbatterie (2) umwandelt,
- die elektronische Stromversorgung (5) die elektrische Gleichspannungsausgangsenergie der Energiespeicherbatterie (2) in elektrische Energie mit einer Wechselausgangsspannung umwandelt, die in der Lage ist, besagten Elektroantrieb (3) zu versorgen.

9. Vorrichtung zur Steuerung des Antriebs nach einem der Ansprüche 1 bis 8, **dadurch gekennzeichnet, dass** die elektronische Stromversorgung (5) eine erste Stufe (5a) in Form eines DC-DC-Spannungskonverters umfasst, der die elektrische Gleichspannung der Energiespeicherbatterie (2) auf eine kontinuierliche Ausgangsgleichspannung konvertiert, deren Minimum äquivalent zu der Spitzenspannung der Welle der vorgesehenen Endspannung für die Versorgung des Elektroantriebs (3) ist, und eine zweite Stufe (5b) in Form eines DC-AC-Konverters umfasst, der die direkte Ausgangsgleichspannung der ersten Stufe (5a) in eine sinusförmige Wechselspannung umwandelt, die in der Lage ist, den Elektroantrieb (3) zu versorgen.

10. Vorrichtung zur Steuerung des Antriebs nach Anspruch 9, **dadurch gekennzeichnet, dass** die erste DC-DC-Stufe (5a) eine H-Brücke aus elektronischen Schaltern (52a, 52b, 52c, 52d) umfasst, deren Eingangspunkte (50, 51) an den Anschlüssen der Energiespeicherbatterie (2) liegen und deren Verbindungspunkte (55a, 55b) die Primärseite eines Spannungserhöhungstransformators (54) versorgen, dessen Sekundärseite ein Gleichrichterelement (59) versorgt, welches besagte Ausgangsgleichspannung liefert.

11. Vorrichtung zur Steuerung des Antriebs nach Anspruch 10, **dadurch gekennzeichnet, dass** der Spannungserhöhungstransformator (54) ein planarer Transformator ist, der in der Lage ist, mit hoher Frequenz zu arbeiten.

12. Vorrichtung zur Steuerung des Antriebs nach Anspruch 11, **dadurch gekennzeichnet, dass** die H-Brücke der ersten DC-DC-Stufe (5a) mit einer Frequenz von etwa 50 kHz arbeitet.

13. Vorrichtung zur Steuerung des Antriebs nach einem der Ansprüche 9 bis 12, **dadurch gekennzeichnet, dass** die zweite DC-AC-Stufe (5b) eine H-Brücke aus elektronischen Schaltern (15a, 15b, 15c, 15d) umfasst, deren Eingangspunkte (59f, 59g) an den Anschlüssen des Gleichrichterelements (59) liegen und deren Verbindungspunkte (15e, 15f) über einen Tiefpassfilter (15) den Antrieb (3) versorgen, wobei die elektronischen Schalter (15a, 15b, 15c, 15d) von einem Mikrocontroller (15g) gesteuert werden, der so programmiert ist, dass er eine bipolare Pulsweitenmodulation durchführt, die an den Verbindungspunkten (15e und 15f) mit einem Nocken mit variablem Tastverhältnis eine Ausgangsspannung (11) erzeugt, die nach der Filterung durch den Tiefpassfilter (15) den Antrieb (3) mit einer im Wesentlichen sinusförmigen einphasigen Spannung (12) versorgt.

14. Schließ- oder Beschattungselement in einem Gebäude, ausgestattet mit einer Vorrichtung zur Steuerung eines Antriebs nach einem der Ansprüche 1 bis 13.

15. Verfahren zur Steuerung eines Antriebs eines Schließ- oder Beschattungselements (10) in einem Gebäude, wobei:
- mindestens ein elektrischer Antrieb (3) mechanisch mit dem Schließ- oder Beschattungselement (10) gekoppelt ist,
- eine elektrische Energiequelle (100) eine elektrische Gleichspannung liefert,
- eine elektronische Stromversorgung (5) den Elektroantrieb (3) aus der elektrischen Energiequelle (100) In Abhängigkeit von Steuerbefehlen (60) versorgt,
- eine Hauptsteuerschaltung (6), die, von der elektrischen Energiequelle (100) versorgt und mit einem ersten Steuersignalempfänger (61) verbunden, dazu geeignet ist, Steuerbefehle (60) zu erzeugen, die an die elektronische Stromversorgung (5) gerichtet sind,
- während einer Wartephase, in der auf den Empfang eines möglichen Steuersignals (7) von einer Fernsteuerung (8) gewartet wird, die Stromversorgung der Hauptsteuerschaltungen (61, 6) und die Stromversorgung (5) besagten Antriebs (3) gesperrt wird und die elektronischen Hilfssteuerschaltungen (80, 81) mit geringem Stromverbrauch aufrecht erhalten werden, die in der Lage sind, den permanenten Empfang und die Speicherung von Steuersignalen (7) zu gewährleisten,
- während einer Empfangsphase die elektronischen Hilfssteuerschaltungen (80, 81) ein über die Luft von der Fernsteuerung (8) empfangenes Steuersignal (7) empfangen und speichern,
- während einer Aufweckphase die Hilfselektronikschaltungen (80, 81) die Hauptsteuerschaltungen (61, 6) und Stromversorgung (5) in Bereitschaft versetzen,
- während einer Sende- und Steuerphase die Hilfselektronikschaltungen (80, 81) die Wiederherstellung der Versorgung der Hauptsteuerschaltungen (61, 6) und der Stromversorgung (5) steuern und dann nach einer vorab festgelegten Wartezeit eine identische Kopie (70) des zuvor aufgezeichneten Steuersignals (7) an die Hauptsteuerschaltungen (61, 6) übertragen, wobei die Hauptsteuerschaltungen (61, 6) den Datenübertragungsblock des Steuersignals (7) dekodieren und korrespondierende Steuerbefehle (60) erzeugen, die an die Hauptstromversorgung (5) gesendet werden, um den Antrieb (3) gemäß den im Steuersignal (7) enthaltenen Informationen mit Strom zu versorgen,
- nach Ausführung der Steuerbefehle (60), ein Zurücksetzen in die Wartephase erfolgt, solange kein neues Signal am Steuersignal-Sendeempfänger (81) empfangen wird.

## Claims

1. Motor control device for a closing or shutting mechanism (10) in a building, comprising:
- at least one electric motor (3) mechanically coupled to the closing or shutting mechanism (10),
- an electrical energy source (100) delivering a DC voltage,
- a power-supply electronic circuit (5) for supplying power to the electric motor (3) from the electrical energy source (100) on the basis of control commands (60),
- a main control circuit (6) which is supplied with power from the electrical energy source (100), is linked to a first control-signal receiver (61) and is designed to generate control commands (60) addressed to the power-supply electronic circuit (5),
- a remote control (8) designed to generate and transmit control signals (7) to the first control-signal receiver (61) by air,
**characterized in that** the motor control device further comprises:
- an auxiliary control circuit (80) designed to stay awake permanently and comprising a memory which is able to store a control signal (7),
- a control-signal transceiver (81) designed to stay awake in a receiving mode so as to receive a control signal (7) received from the remote control (8) and to transmit said control signal (7) to the auxiliary control circuit (80) which stores it,
- the auxiliary control circuit (80) being further designed to establish the supply of power to the main control circuit (6) and to the power-supply electronic circuit (5) after receiving and storing said control signal (7),
- the auxiliary control circuit (80) being further designed to put the control-signal transceiver (81) into a transmission mode and to command it to transmit an identical copy (70) of said stored control signal (7) to the first control-signal receiver (61),
- the auxiliary control circuit (80) being further designed to put the control-signal transceiver (81) back into its receiving mode and to inhibit the supply of power to the main control circuit (6) and to the power-supply electronic circuit (5) after the control commands (60) have been executed following said control signal (7) received on the control-signal transceiver (81) and for as long as no new signal is received on the control-signal transceiver (81).

2. Motor control device according to Claim 1, **characterized in that** the auxiliary control circuit (80) commands the transmission of said identical copy (70) of the stored control signal (7) to the first control- signal receiver (61) after a predetermined waiting time which is chosen to be longer than the time needed for the first control-signal receiver (61), after its power supply has been established, to be able to acknowledge said identical copy (70) of the control signal (7) coming from the control-signal transceiver (81) .

3. Motor control device according to one or the other of Claims 1 and 2, **characterized in that** the auxiliary control circuit (80) and the control-signal transceiver (81) are low-consumption electronic circuits which do not need to have a reduced-consumption idle state.

4. Motor control device according to any one of Claims 1 to 3, **characterized in that** the auxiliary control circuit (80) comprises a programmed microcontroller.

5. Motor control device according to any one of Claims 1 to 4, **characterized in that** the control-signal transceiver (81) is designed to transmit said identical copy (70) of the stored control signal (7) to the first control-signal receiver (61) by air.

6. Motor control device according to any one of Claims 1 to 4, **characterized in that** the control-signal transceiver (81) is connected to the first control-signal receiver (61) via a conductive connection so as to transmit said identical copy (70) of the stored control signal (7) to the first control-signal receiver (61) by conduction.

7. Motor control device according to any one of Claims 1 to 6, **characterized in that** the electrical energy source (100) is a battery pack (2) supplied with power from a photovoltaic solar panel (1).

8. Motor control device according to Claim 7, **characterized in that**:
- the electric motor (3) is a low-voltage AC motor having an rms voltage in the range comprised between 50 and 1000 V, advantageously equal to about 230 V;
- the photovoltaic solar panel (1) delivers a DC voltage of less than the rms voltage of the electric motor (3),
- the battery pack (2) has a nominal voltage of less than said rms voltage of the electric motor (3) and of greater than the DC voltage delivered by the photovoltaic solar panel (1),
- a DC-DC charger (4) converts the electrical energy output from the photovoltaic solar panel (1) into an electrical energy at the recharging voltage of the battery pack (2),
- the power-supply electronic circuit (5) transforms the electrical energy output at the DC voltage of the battery pack (2) into an electrical energy at the output AC voltage able to supply power to said electric motor (3).

9. Motor control device according to any one of Claims 1 to 8, **characterized in that** the power-supply electronic circuit (5) comprises a first stage (5a) in the form of a DC-DC voltage boost converter which converts the DC voltage from the battery pack (2) into a DC output voltage of at least equal to the peak voltage of the wave of the final voltage envisaged for supplying power to the electric motor (3), and comprises a second stage (5b) in the form of a DC-AC converter which transforms the DC voltage output from the first stage (5a) into a sinusoidal AC voltage able to supply power to the electric motor (3).

10. Motor control device according to Claim 9, **characterized in that** the DC-DC first stage (5a) comprises an H bridge of electronic switches (52a, 52b, 52c, 52d) the input points (50, 51) of which are at the terminals of the battery pack (2) and the junction points (55a, 55b) of which supply power to the primary of a voltage boost transformer (54) the secondary of which supplies power to a rectifier element (59) providing said DC output voltage.

11. Motor control device according to Claim 10, **characterized in that** the voltage boost transformer (54) is a planar transformer able to operate at high frequency.

12. Motor control device according to Claim 11, **characterized in that** the H bridge of the DC-DC first stage (5a) operates at a frequency of about 50 kHz.

13. Motor control device according to any one of Claims 9 to 12, **characterized in that** the DC-AC second stage (5b) comprises an H bridge of electronic switches (15a, 15b, 15c, 15d) the input points (59f, 59g) of which are at the terminals of the rectifier element (59), the junction points (15e, 15f) of which supply power to the motor (3) via a low-pass filter (15), the electronic switches (15a, 15b, 15c, 15d) being driven by a microcontroller (15g) programmed to carry out bipolar pulse-width modulation producing, at the junction points (15e and 15f), a pulsed output voltage (11) having a variable duty cycle which, after being filtered by the low-pass filter (15), supplies power to the motor (3) via a substantially sinusoidal singlephase voltage (12).

14. Closing or shutting mechanism in a building, equipped with a motor control device according to any one of Claims 1 to 13.

15. Method for the motor control of a closing or shutting mechanism (10) in a building, in which:
- at least one electric motor (3) is mechanically coupled to the closing or shutting mechanism (10),
- an electrical energy source (100) delivers a DC voltage,
- a power-supply electronic circuit (5) supplies power to the electric motor (3) from the electrical energy source (100) on the basis of control commands (60),
- a main control circuit (6), which is supplied with power from the electrical energy source (100) and is linked to a first control-signal receiver (61), is designed to generate control commands (60) addressed to the power-supply electronic circuit (5),
- during a waiting phase, while waiting to receive a possible control signal (7) coming from a remote control (8), the supply of power to the main circuits for controlling (61, 6) and supplying power (5) to said motor (3) is inhibited, and the supply of power to the low-consumption auxiliary electronic circuits (80, 81) which are able to permanently ensure the reception and storage of the control signals (7) is conserved,
- during a receiving phase, the auxiliary electronic circuits (80, 81) receive and store a control signal (7) received from the remote control (8) by air,
- during a wake-up phase, the auxiliary electronic circuits (80, 81) wake up the main circuits for controlling (61, 6) and supplying power (5),
- during a transmission and control phase, the auxiliary electronic circuits (80, 81) command the reestablishment of the supply of power to the main circuits for controlling (61, 6) and supplying power (5), then, after a predetermined waiting time, transfer an identical copy (70) of the previously stored control signal (7) to the main control circuits (61, 6), which main control circuits (61, 6) decode the frame of the control signal (7) and produce corresponding control commands (60) which are sent to the main power-supply circuits (5) so as to supply power to the motor (3) according to the information contained in the frame of the control signal (7),
- after the control commands (60) have been executed, the waiting phase is returned to for as long as no new signal is received on the control-signal transceiver (81) .
